# EUROPEAN PATENT SPECIFICATION

(11) **EP 3 745 603 B1**
(45) Date of publication and mention of the grant of the patent: **20.12.2023**
(21) Application number: 19177259.9
(22) Date of filing: 29.05.2019
(51) Int. Cl.: H04B 3/32

(54) **REVERSE/REMOTE POWERING IN COMBINATION WITH VECTORING**
UMGEKEHRTE/ENTFERNTE LEISTUNGSVERWALTUNG IN KOMBINATION MIT VEKTORISIERUNG
ALIMENTATION INVERSE/À DISTANCE EN COMBINAISON AVEC LA VECTORISATION

(43) Date of publication of application: 02.12.2020
(73) Proprietor: Nokia Solutions and Networks Oy, 02610 Espoo (FI)
(72) Inventor: YSEBAERT, Geert, 3020 Winksele (BE); THEYS, Thomas, 2440 Geel (BE); DE VETTER, Giovanni, 9190 Klemzeke (BE)
(74) Representative: MERH-IP Matias Erny Reichl Hoffmann Patentanwälte PartG mbB

(56) References cited:
- EP-A1- 3 208 969
- WO-A2-2016/096583
- IL-A- 138 759

## Description

### Technical Field

The present document relates to power management in network systems. In particular, the present document relates to power management for network systems where reverse and/or remote powering is deployed in digital subscriber line systems possibly in combination with vectoring technology.

### Background

In general, Digital Subscriber Line (DSL) is a family of broadband high-speed technologies, such as Asymmetric DSL (ADSL), Very high bit-rate DSL (VDSL), G.fast, that are used to transmit digital data over e.g. telephone lines (copper wires). G.fast can offer a data rate of around 1-2 Gbps to end-users (subscriber users). In particular, G.fast technology is based on extending the spectrum up to 106 MHz or 212 MHz over a DSL line. In order to utilize those frequencies, the DSL Access Multiplexer (DSLAM) equipment needs to be installed much closer to the end-user (compared to e.g. ADSL or VDSL), typically via a Distribution Point Unit (DPU) with a small number of DSL ports (e.g., 16 ports). Also, the DPU may be connected, directly or indirectly via another DPU, through a fiber or any other suitable means to an edge router or an Ethernet switch located deeper in the network system. Typically, in a pay-as-you-grow scenario, an operator would like to start with the installation with one DPU and then gradually extend thez network with more DPUs at the same location when the number of subscribers increases. In some cases, when the end-users that are connected to those DPUs share the same binder of twisted pairs, crosstalk between the end-users (subscriber users) and/or within the DPU may become problematic and may result in the degradation of the system performance.

In order to cancel the crosstalk between users and hence optimize the bitrate performance of subscriber lines (e.g., G.fast subscribers), some enhanced functionality such as vectoring may need to be employed. When subscriber lines connected to different DPUs share the same cable, the vectoring needs to happen across those DPUs. In some cases, this is also referred to as cross-DSLAM vectoring or XDLV. In order to perform XDLV, vectoring data (e.g. tone data, synchronization data, ...) is exchanged between those DPUs. The exchange of this vectoring data can be done by interconnecting the DPUs e.g. with a copper cable (e.g. Quad Small Form-factor Pluggable (QSFP) cable) or with e.g. a fiber cable. Additionally, the same vectoring technology can also be used to cancel the crosstalk in cases when the DPUs belong to multiple co-located operators and the multiple operator share the same cable bundle. In some cases, this mode is also referred to as Multi-Operator-Vectoring (MOV).

Apart from crosstalk, another challenge may arise for powering the DPUs in the network system. In many cases, local powering of those DPUs may not be easily feasible or it may take a long time to get all permissions required. However, since those DPUs are installed close to the end customers (e.g., in a G.fast network or in a VDSL network with short loops), it is principally possible to power the DPUs from the subscriber premises by injecting power on the respective subscriber lines (DSL lines) in addition to the data-carrying signal. This is sometimes referred to as Reverse Power Feed (RPF). Alternatively or in addition, power may be supplied remotely to DPUs via transmission lines from the central office, which may be referred to as Remote Power Feed Current (RFT-C) or Remote Power Feed Voltage (RFT-V). When only one subscriber is active in the binder, the subscriber device needs to be able to power up the entire DPU to have service. When more than one line is active in the binder, certain enhanced functionality (e.g., vectoring) needs to be powered and enabled at the DPU(s), which typically requires to be able to drain power from more than one end user. In other words, multiple users need to be able to supply/deliver power to the DPU through their respective subscriber lines in order to enable/support that enhanced functionality at the DPU. In some other cases, power delivery from multiple users may also be needed in order to extend the service reach.

IL 138 759 A discloses a method for improved power distribution between subscriber lines fed from an RU unit receiving power from an EU unit through a DSL line, which comprises defining a maximal value of a current I_{dsi} (I_{dslmax}) allowed to be input to the RU unit from the DSL line, monitoring the input current I_{dsl} of the RU unit and producing a control signal when said input current exceeds the value I_{dslmax}, and dynamically distributing output current of the RU unit between the subscriber lines according to their respective consumption as long as the input current is in the range 0≤ I_{dsl} ≤ I_{dslmax}, while limiting the output current consumption by said subscriber lines upon receiving the control signal that said I_{dslmax} is exceeded.

### Summary

In view of some or all of the above problems (and use cases), the present disclosure proposes a power management design that can be used in network systems, such as access networks. The network systems may be based on DSL technologies, such as VDSL, G.fast, G.mgfast, etc. In particular, the proposed power management design may be applied to network systems where several (enhanced) technologies like RPF and vectoring are employed in combination. Embodiments of the present invention are set out in the appended set of claims.

As a broad aspect, there is provided a method for power management in a network system (e.g., a VDSL or G.fast or G.mgfast based network system). The network system comprises a plurality of network nodes. The plurality of network nodes may generally refer to network nodes of the same type that are employed in the network system. For example, in a G.fast based network system, the network node may refer to a DPU. The plurality of network nodes are coupled (connected) to respective transmission lines. For example, the plurality of network nodes may be connected/coupled to a plurality of subscriber devices (e.g., modems) through respective transmission lines. In such cases, the transmission lines may also be referred to as subscriber lines or subscriber loops (e.g., twisted copper pairs). As another example, the plurality of network nodes are connected/coupled together to a (central) upstream node of the system through the respective transmission lines. In such cases, the central node may be referred to as a Central Office (CO) and the transmission lines may be referred to as uplink lines or backhaul lines (e.g., optical fibers or bonded copper pairs).

In examples of such systems relating to DSL, first and second network nodes of the plurality of nodes are further interconnected with each other through a first interconnection for sharing information relating to data transmitted on the transmission lines (subscriber lines). This shared information can be used by the network nodes to coordinate the way that data is transmitted on the subscriber lines in order to improve performance. In case of vectoring, the shared information relates to the transmit constellation points (aka tone data).

The method comprises a step of delivering power to a first network node of the plurality of network nodes through at least one respective first transmission line (e.g. via a subscriber line from a subscriber device; or via an uplink line from an upstream node). In some cases, the total (maximum) power that can be delivered by the respective transmission line(s) to the network node may be considered as the total power available at the network node. In case of RPF via subscriber lines, the total power available at the network node may depend on how many subscriber devices are connected to the node and powered/active, thereby injecting power via their respective subscriber lines. In case of RFT-C/V, the total available power may depend on how much power an upstream node can provide.

The method further comprises determining whether the first network node has excess power based on the power available through the at least one first transmission line and based on expected power consumption of the first network node. The expected power consumption of a network node may generally be referred to the power required by the network node to maintain its own (regular) operation, and (optionally) to also be able to activate/enable some (extra) enhanced functionalities (e.g., vectoring) if needed. Subsequently, if the first network node has excess power (with respect to its own expected power consumption), the method further comprises delivering at least part of the excess power of the first network node to at least one second network node of the plurality of network nodes. The delivery of the at least part of the excess power is performed via a (dedicated) interconnection with the other network node(s) of the system through a (dedicated) interface. In some case, reuse (e.g., by means of multiplexing) of some existing interconnection and/or interface may be possible, as will be appreciated by the skilled person. However, a new interconnection between the first network node and the at least one second network node is still required in such cases. The new interconnection may be implemented with wireless or wired connection, contact points, or any other suitable manner as will be appreciated by the skilled person. For example, wireless power sharing between network nodes could be implemented using magnetic (induction) power transmission techniques.

Configured as such, the available excess power (with respect to the power consumption of the network node itself) of the first network node can be delivered to or shared with other network node(s) in the same XDLV/MOV chain which may be short of power (e.g., for enabling/activating certain enhanced functionalities and/or for wide range service support). This typically happens when e.g. a number of subscriber devices coupled to the first network node is larger than a number of subscriber devices coupled to the second network node. In this case, it is likely that the first network node receives more power from the subscriber devices (via subscriber lines) than it needs for its own operation and thus has excess power. If the number of subscriber devices coupled to the second network node is small (e.g., only one subscriber device), it may not receive enough power to enable all its functions, e.g. to reduce cross-talk on subscriber lines. The proposed method then enables sharing of available (excess) power across the network nodes. And consequently, the overall performance of the system (e.g., in terms of bitrate) can be improved, since enhanced functionalities (e.g., vectoring) can now be activated even for situations where supply power (e.g., provided through only one transmission line) would otherwise be insufficient. In other situations, in case there is no excess power available at the first network node, it could mean that the enhanced functionality (e.g., vectoring) cannot be enabled or activated on other network node(s). However, these are typically cases with a low number of lines connected (e.g., only one respective subscriber coupled with each of the network nodes). Consequently, the probability of having high crosstalk and hence a need for the vectoring would be low anyway.

In some examples, network nodes (e.g. the first network node) are connected through some of the at least one first transmission line to respective subscriber devices. The respective subscriber devices are configured to inject power over some or all of the at least one first transmission line (subscriber line). As mentioned above, this kind of power delivery (injection) from the subscriber devices may be referred to as RPF. In some examples, network nodes (e.g. the first network node) are connected through some of the at least one first transmission line to an upstream node (e.g., the CO). The upstream node is configured to inject power over some or all of the at least one first transmission line (uplink line). In some cases, this kind of power delivery (injection) from the CO may be referred to as remote power feed (RFT-C/V). In some examples, power is supplied to the first network node via subscriber lines from subscriber devices and via the uplink line from the upstream node.

In some examples, the excess power available for delivery at the first network node may be determined based on a difference between the power available through the at least one first transmission line and a power required by the first network node for its own operation. In some cases, part of the excess power (e.g., 20%) as determined above may be kept by the (first) network node and saved as some kind of buffer for potential further use. In such cases, only the remaining part of the excess power (e.g., 80%) as determined above can be delivered to other network node(s) in the network system. Therefore, it is generally possible that not all but only a fraction of the available excess power of the network node is delivered (shared) with the other network node(s) in the system.

The method further comprises a step of, at the first network node and the at least one second network node, monitoring their own power status. The method subsequently comprises a step of exchanging information about their respective own power status with each other, e.g. via messaging. As will be appreciated by the skilled person, such power status related information may comprise information (e.g., messages) indicating that the network node has excess power available to be shared (and possibly how much excess power is available) or any other suitable information to enable the sharing of excess power. For example, the exchanged power status information may also indicate which node is short of power and can make use of the shared excess power by enabling further functions, and how much power the node needs. As another example, the power status information may also indicate the maximum power that can be delivered per subscriber in order to do fair power balancing between all users sharing the same binder.

Additionally or alternatively, the method further comprises a step of, at the first network node and the at least one second network node, detecting the power status of each other. Similarly as above, such power status may comprise information indicating that the other network node has excess power available to be delivered or any other suitable information. For example, excess power can trigger a relay to be switched in the non-powered DPU and as such can deliver excess power to the non-powered DPU. As will be understood and appreciated by the skilled person, in some cases, if a network node is capable of (actively) detecting the power status of the other network nodes, messaging among the network nodes needed for exchanging the information may be possibly omitted (avoided).

In embodiments, the interface through which power can be shared between the nodes can be one of the inputs used in the overall node power architecture. If a node for instance has 16 subscriber ports (meaning 16 users can deliver power to the node), this additional interface can be interpreted as a 17th interface through which power can be delivered to the node. At that moment in time there is no communication at all on this interface between the different nodes. To avoid that too much power is extracted from the first node to the second node, power sharing can be limited by design to for example the power that corresponds to what a single user can deliver for RPF means.

Notably, the indication of additional power available at the other (second) network node(s) may be then used as a trigger to enable or activate the enhanced functionality such as vectoring at the (first and/or second) network node. Configured as such, each network node may be able to allow messages to be shared or exchanged among all network nodes (in particular the network nodes in the XDLV/MOV chain) about (excess) power status of itself and/or of the other network node(s) and/or about the need for additional power to enable additional functionality.

Notably, as will be also understood and appreciated by the skilled person, in some further cases, the power status information (either of the network node itself or of the other network nodes) may be reported via a respective uplink to a central node located somewhere (deeper) in the network. Such central node may for example be the CO as mentioned earlier or some other suitable node in the cloud. Accordingly, in such cases, this central node may provide an approval to the network node with excess power to deliver the power to the other network node(s) with insufficient power. The central node may further decide which node(s), in case of multiple nodes that are short of power for enabling extended functionalities, shall receive power from the node that is capable of sharing power.

In some examples, the method may further comprise a step of balancing an amount of power drained from the respective transmission lines coupled to the different network nodes. In particular, the power balancing may happen between the transmission lines connected to the first and at least one second network nodes. For example, an amount of power drained from the respective subscriber lines coupled to the different network nodes may be balanced. There could also be power balancing between the subscriber lines, local AC/DC power and power delivered over the uplink line. Generally speaking, in cases of RPF, assuming a low number of subscriber lines on a first network node and a high number of subscriber lines on a second network node, it would not be fair that the end users on the first network node need to deliver more power for the same service (and hence have a possibly higher electricity bill) compared to the other end users on the second network node. When all these end users share the same cable bundle and hence need e.g. vectoring to obtain high speed/quality service, it should not matter, in terms of the electrical power they provide via reverse power feed, to which network node (first or second node in the above scenario) they are connected to. Thus, it would be fair to balance the power provided by all end users that are connected to a group of network nodes that are collocated and serve subscriber lines that go through the same wire bundle. As will be understood and appreciated by the skilled person, in general, the power balancing mechanism can be performed either on a network node level (i.e., power balancing between end users on the same network node); or on a higher e.g. system level (i.e., power balancing between end users across different network nodes). Thus, similarly as illustrated above, algorithms to perform fair power balancing (or the respective node which performs power balancing) could also be located somewhere (deeper) in the network, e.g. by an upstream node that instructs the nodes how to share power and how much power to drain from transmission lines.

In some examples, the step of delivering excess power (or at least part thereof) to the at least one second network node is performed for enabling an extended functionality (or more) at the at least one second network node, in particular for multi-user operation of the at least one second network node, i.e. enabling additional functionality for improving performance when serving multiple users. By way of example, if the network system is based on DSL technologies such as VDSL or G.fast or G.mgfast, then the step of delivering excess power (or at least part thereof) to the at least one second network node may be performed for enabling the vectoring functionality at the at least one second network node for cancelling crosstalk. The proposed power sharing can have other use-cases as well. For example, assume a user device coupled with an unpowered (second) network node cannot deliver sufficient power (or no power at all) to power still this node that he is connected to. Then the first node (having excess power available) can deliver power to the second node to enable basic operation of this node and to provide standard functionality (rather than enabling enhanced functionality as explained above).

According to another broad aspect, there is provided a network node deployed in a network system. The network system may be the same as or similar to the system as illustrated above. Also, similar as above, the network node may be coupled with at least one subscriber device through the respective subscriber lines. On the other hand, the network node may be connected to a central node (e.g., a CO) of the network system through respective uplink lines. The subscriber lines and the uplink lines may be generally referred to as transmission lines and power for operation of the network node may be provided by the subscriber lines or the uplink lines, thereby implementing reverse power feed (RPF) or remote power feed (RFT-C/V) respectively.

In particular, the network node comprises a power extraction unit configured to extract power from at least one respective transmission line (e.g., subscriber line, uplink line). For example, the power extraction unit may receive power from one or more subscriber lines (through respective subscriber ports), one or more uplink lines (through respective network ports), or a combination thereof. As will be understood and appreciated by the skilled person, in some cases, the power extraction unit may be used in combination with different powering technologies, such as AC or DC local powering. The total (maximum) power able to be drained/extracted from the respective transmission line(s) may be considered as the total power available at the network node.

The network node further comprises a power measurement unit configured to determine whether excess power is available at the network node. The excess power is determined based on a power available through the at least one transmission line and a power consumption (actual or estimated) of the network node itself. The power consumption of a network node is generally referred to the power required by the network node to maintain its own regular operation, and (optionally) to also be able to activate some (extra) enhanced functionalities (e.g., vectoring) if needed. In some cases, the excess power can be determined based on the difference between the (total) power available through the at least one transmission line and the power consumption of the network node. In some further cases, part of the excess power (e.g., 20%) as determined above may be kept by the network node and saved as some kind of buffer for potential further use. In such cases, maybe only the remaining part of the excess power (e.g., 80%) as determined above can be delivered to other network node(s) in the network system. The network node further comprises a power distribution unit and a corresponding power distribution interface.

Thus, if the excess power is determined by the power measurement unit as available at the network node, the power distribution unit is then configured to deliver at least part of the excess power (depending on whether buffering of part of the available excess power is required or not at the network node) to at least one further network node through the power distribution interface. In particular, this is configurable during implementation or by the operator. Configured as such, the excess power (with respect to the power consumption of the network node itself) of the network node can be delivered to or shared with the other network node(s) in the same XDLV/MOV chain which is/are short of power (e.g., for enabling/activating certain enhanced functionalities and/or for wide range service support). And consequently, the overall performance of the system (e.g., in terms of bitrate) can be improved. The power distribution interface allows the network nodes to share power and may be implemented in many different ways. For example, the nodes may be interconnected with a ring or a mesh structure. In examples, the nodes are interconnected in a XDLV/MOV chain. Thus, each node may be connected with each other node so as to exchange power between the nodes. The physical realization of the power distribution interface may be based on e.g. dedicated wiring, re-use of existing wiring (e.g. crosstalk cancellation interconnect cables), induction charging without interconnection, through cables at the Main Distribution Frame (MDF), contact points, etc.

In some examples, a network node may further comprise a power reception interface to receive shared power from another power sharing node. The power reception interface may be coupled with the power distribution interface of the power sharing node. For example, the power reception interface through which power can be received from the power sharing node can be one of the inputs used in the overall node power architecture. If a node for instance has 16 subscriber ports (meaning 16 subscribers can deliver power via RPF to the node), the power reception interface can be interpreted as a 17th subscriber port through which power can be delivered to the node. For this purpose, there is no communication necessary on this interface between the different nodes. To avoid that too much power is extracted from the (source) node to the further (sink) node, the amount of shared power can be limited by design to, for example, the power that corresponds to what a single subscriber line can deliver for RPF means.

In some examples, the network node may further comprise a power communication unit and a power communication interface. In particular, the power communication unit may be configured to share information about power status of the network node through the power communication interface with the at least one further network node. As will be appreciated by the skilled person, such power status related information may comprise information (e.g., in form of messages) indicating that the network node has excess power available to share or any other similar or suitable information. As another example, the power status information may also indicate the maximum power that can be delivered per subscriber in order to do fair power balancing between all users sharing the same binder. In some examples, the power distribution interface and the power communication interface may be combined in one interface for communicating power status information and sharing power between network nodes using the same wiring or cable.

Additionally or alternatively, in some cases, the network node may further comprise a power detection unit configured to detect power status of the at least one further network node through the power communication interface. Similarly, such power status may comprise information (e.g., a message) indicating that the further network node(s) has excess power available to deliver or any other similar or suitable information. The indication of additional power available at the other network node(s) may be then used as a trigger to enable or activate the enhanced functionality such as vectoring. In some cases, instead of using the power communication interface, the network node may yet further comprise an additional interface for exchanging the power status information/message with the other network node(s), possibly via a further interconnection. Configured as such, each network node may be able to allow messages to be shared or exchanged among all network nodes (in particular the network nodes in the XDLV/MOV chain) about (excess) power status of itself and/or of the other network nodes. As will be understood and appreciated by the skilled person, in some cases, if a network node is capable of (actively) detecting the power status of the other network nodes, the messaging among the network nodes needed for exchanging the information may be possibly omitted (avoided).

Notably, as will be also understood and appreciated by the skilled person, in some further cases, the power status information (either of the network node itself or of the other network nodes) may be reported via the respective uplink to a central node located somewhere (deeper) in the network as explained above.

In some examples, the network node may further comprise a power balancing unit configured to perform fair power balancing (or any other power balancing scheme defined by the operator) between the users over the full XDLV/MOV scenario. In particular, the power balancing may happen between the transmission lines (subscriber lines, uplink lines) connected to the different network nodes as explained above.

In some examples, the network system may be based on VDSL, G.fast, G.mgfast, or any other suitable communication technology. Accordingly, the network node may be implemented as a DPU or as a DSLAM.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that device/apparatus features may be interchanged in many ways. In particular, the details of the disclosed devices can be implemented as a method and vice versa, as the skilled person will appreciate. In addition, the above aspects may be combined in many ways, even if not explicitly disclosed. The skilled person will understand that these combinations of aspects and features/steps are possible unless it creates a contradiction which is explicitly excluded.

Other and further embodiments of the present invention will become apparent during the course of the following discussion and by reference to the accompanying drawings.

### Brief Description of the Figures

Embodiments of the disclosure are explained below in an exemplary manner with reference to the accompanying drawings, wherein
Figure 1 schematically illustrates an exemplary system according to an embodiment of the present invention;
Figure 2 schematically illustrates an exemplary network node according to an embodiment of the present invention; and
Figure 3 schematically illustrates an exemplary method according to an embodiment of the present invention.

### Detailed Description

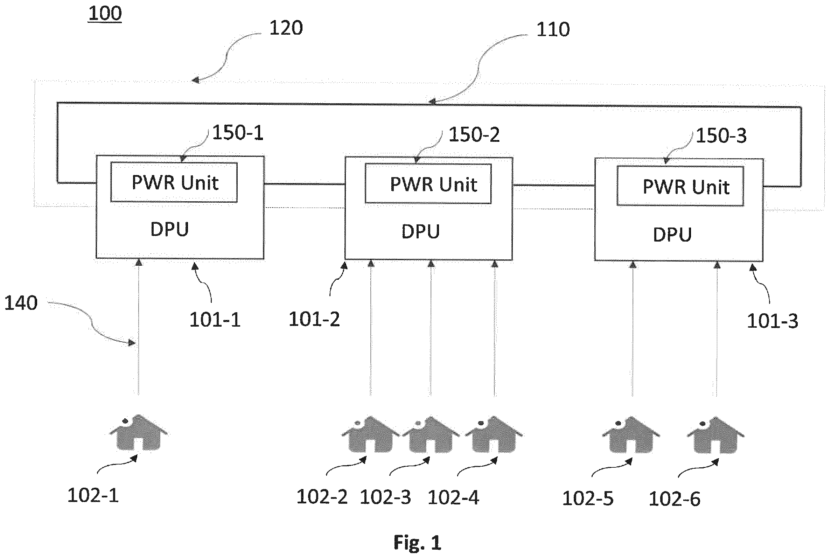

Figure 1 schematically illustrates an exemplary system 100 according to an embodiment of the present invention. The system 100 may be based on DSL technologies such as VDSL, G.fast, G.mgfast, etc. In particular, the exemplary system 100 comprises a plurality of (three in the present example) network nodes 101-1, 101-2 and 101-3. In some cases such as a G.fast based system, these network nodes 101-1, 101-2 and 101-3 may be DPUs. The network system 100 further comprises a plurality of (six in the present example) subscriber devices (end-user devices) 102-1 through 102-6. In some cases, these subscriber devices may also be referred to as Customer-Premises Equipment (CPE). As can be seen from the exemplary system 100 in Figure 1, the first network node 101-1 is coupled with one subscriber device (i.e., subscriber device 102-1), the second network node 101-2 is coupled with three subscriber devices (i.e., subscriber devices 102-2, 102-3 and 102-4), and the third network node 101-3 is coupled with two subscriber devices (i.e., subscriber devices 102-5 and 102-6), respectively. The subscriber devices 102-1-102-6 can be coupled to the corresponding network nodes 101-1-101-3 through respective subscriber lines (collectively shown as 140 in Figure 1). As will be appreciated by the skilled person, the subscriber lines may be implemented using twisted copper pairs or any other suitable manner. Additionally, the network nodes 101-1 - 101-3 may be connected/coupled to one central node (not shown in Figure 1) of the system, e.g., through respective uplink lines such as optical fibers or bonded copper pairs. In some cases, the central node may be referred to as a CO. The subscriber lines and the uplink lines may be generally referred to as transmission lines.

Powering of the network node(s) may be achieved principally either from the central node side (RFT-C/V) or from the subscriber device side (RPF). But, it may be noted that typically in a G.fast based network system, the central node is located remotely at a distance (e.g., several kilometers) far away from the network node, compared to the distance (e.g., some dozens or hundreds of meters) between the network node and the respective subscriber device(s). Consequently, it might not be easy in some cases to provide power to the network nodes from the central node, in particular when using optical fibers. Also, since the network nodes are located closer to the customer premise, local powering of those DPUs may not be feasible or may take a long time to get all permissions required. Therefore, in such cases, powering of the network nodes provided (directly) from the subscriber devices through the respective subscriber lines (e.g., subscriber lines 140 as shown in Figure 1) may be preferred. As mentioned above, this kind of powering may also be referred to as RPF. As will be understood and appreciated by the skilled person, RPF may be in practice combined with other technologies such as RFT-V and RFT-C (in which power can be delivered to the network nodes using dedicated twisted pairs from the Central Office). For the purposes of illustration only, in the exemplary system as shown in the figures of the present disclosure, powering of the network nodes is assumed to be performed through the subscriber lines (i.e., RPF). The same principle of power sharing amongst the network nodes can be applied if the power is supplied via the uplink lines from an uplink device such as a CO (RFT-V/C).

On the other hand, in cases when the end-users (e.g., the subscriber devices 102-1 - 102-6 as shown in Figure 1) connected to the network nodes (e.g., the network nodes 101-1-101-3) share the same binder of twisted pairs, crosstalk between the end-users (subscriber users) and/or within the DPU may happen and may result in the degradation of the system performance (e.g., lower achievable data rate). As will be appreciated by the skilled person, crosstalk typically refers to interference from a TX port to an RX port that affects the direct signal detection at that RX port. In particular, crosstalk between signals traveling in the same direction (which may in some cases referred to as "FEXT") is from a remote TX port, and thus crosstalk arises on account of the (capacitive) coupling between twisted copper pairs. In that case, the crosstalk can be considered to occur between subscriber lines. Conversely, crosstalk between signals traveling in opposite directions (which may in some cases referred to as "NEXT") is from a local TX port. NEXT coupling typically takes place partly within the network node itself, and partly as a signal traveling over a copper pair away from the network node and then coupling back onto another pair towards the access node.

In order to cancel the crosstalk and hence improve (optimize) the system performance, some enhanced functionality such as vectoring may need to be employed across those network nodes. As mentioned above, this may also be referred to as cross-DSLAM vectoring or XDLV. The exchange of vectoring data (e.g., tone data) is typically done by interconnecting the network nodes with a copper cable (e.g. QSFP cable) or a fiber cable. Such interconnection is represented by the dashed line 120 in Figure 1. Additionally, the same vectoring technology can also be used to cancel the crosstalk in cases when the DPUs belong to multiple co-located operators and the multiple operator share the same cable bundle. As mentioned above, this mode is also referred to as MOV.

However, as will be appreciated by the skilled person, enabling or employing the enhanced functionality (e.g., vectoring) typically requires more supply power. That is to say, when vectoring (e.g., XDLV/MOV) with two or more network nodes (e.g., 2 DPUs) is deployed in combination with RPF, problems may arise. For example, assuming that there are two DPUs (simply referred to as DPU1 and DPU2) in an XDLV/MOV scenario, that DPU1 is connected with 1 RPF line and that DPU2 is connected with N (N > 1) RPF lines, then this one RPF line on DPU1 needs to deliver more power to that DPU1 (compared to that of the non-XDLV/MOV scenario) in order to activate vectoring functionality on both DPU1 and DPU2. Depending on the power consumption of the DPU1 and the power that can be injected by the end-user through the respective RPF line, either the DPU1 would not be able to start up due to insufficient power delivery through the RPF line; or the reach of the DPU1 would be significantly reduced since it needs to take the worst-case power consumption of the DPU1 into account (assuming that vectoring has to be always active).

Therefore, for illustrative purposes only, in the exemplary system 100 as shown in Figure 1 it is generally assumed that the power supplied by only one subscriber device is not sufficient to enable the vectoring functionality at the network node, while the power supplied by more subscriber devices (e.g., two or three) are (more than) sufficient to enable the vectoring functionality at the network node. That is to say, referring to Figure 1, with only the power available (e.g., delivered from the subscriber device 102-1) through the respective subscriber line, the network node 101-1 cannot enable/activate the vectoring functionality. On the other hand, with the power available (e.g., delivered from the subscriber devices 102-5-102-6) through the respective subscriber lines, it is sufficient for the network node 101-3 to enable the vectoring functionality. Similarly, the network node 101-2 can also enable the vectoring functionality with the sufficient power available (e.g., supplied by the subscriber devices 102-2 - 102-4) through the respective subscriber lines. Consequently, this may result in a problem if the vectoring functionality has to be activated on all of the three network nodes 101-1, 101-2 and 101-3. However, it should be noted that the assumption made in Figure 1 is only for illustrative purposes. In practice, the situation of insufficient power could be generally caused by different reason (apart from not enough number of subscriber devices to provide power). For example, assuming a scenario where a first network node has three end users on very long loops while a second node has two users on very short loops. In this case, the three users on the very long loops might have difficulty to power the network node, due to the loop attenuation along the long loops. Therefore in such case, if the second network node has excess power, it could help to power the first node by sharing/delivering its excess power to the first network node.

Referring back to the exemplary system of Figure 1, in order to solve the potential problem of insufficient power e.g. on the first network node 101-1, the present disclosure generally proposes to interconnect the network nodes 101-1 - 101-3 together through an additional wiring (interconnection) 110, such that the subscriber devices on any network node can also deliver power to the other network node(s). Depending on circumstances, such wiring/interconnection may be implemented using for example dedicated power cabling, interconnection through cable patching in the Main Distribution Frame (MDF), vectoring QSFP interconnection cables, induction charging without interconnection, contact points or any other suitable mechanism, as will be understood and appreciated by the skilled person. For purposes of simplified illustration only without any limitation, the network nodes 101-1 - 101-3 each comprises a respective simplified power unit 150-1 - 150-3, for distributing (or delivering) power from one network node (which may possibly have excess power to share) to another network node (which may possibly have insufficient operation power e.g. to activate vectoring functionality). In the exemplary system 100 as shown in Figure 1, it generally means that the power may be delivered from the network node 101-2 and/or the network node 101-3 to the network node 101-1, since the network node 101-1 is coupled with only one subscriber device 102-1.

Configured as such, the excess power (with respect to the power consumption of the node) of one or more network nodes can be delivered to or shared with the network node(s) short of power (e.g., for enabling/activating certain enhanced functionalities and/or for wide range service support). It should be nevertheless noted that, in some cases of more complex system topology (e.g., due to large number of network nodes deployed in the system), the delivery or (re-)distribution of the (excess) power of one or more network nodes to the other one or more network nodes may be conducted or controlled with the help of some kind of central control node deployed also in the network system, as will be appreciated by the skilled person. Naturally, it would also be understood that with the increased number of network nodes deployed in the system, the interconnections between the network nodes may be in the form of chain, ring, bus, star, mesh, or any other suitable form. In general, the concept of delivering or sharing the power among the interconnected network nodes as illustrated with reference to the exemplary system 100 of Figure 1 also apply to those more complex systems.

Incidentally, it is also to be noted that it may also be possible in some cases that the plurality of network nodes of the system exchange only excess power between the network nodes, without sharing tone data. This generally means that every network node would perform vectoring on its own (no cross-DSLAM vectoring). This situation could typically occur if the subscriber lines connected to the different network nodes do not share the same binder or in a star topology (e.g., with a coax interface). However, in such cases, the proposed concept could still be exploited to fairly share/distribute the power among the network nodes (even without enabling/activating vectoring).

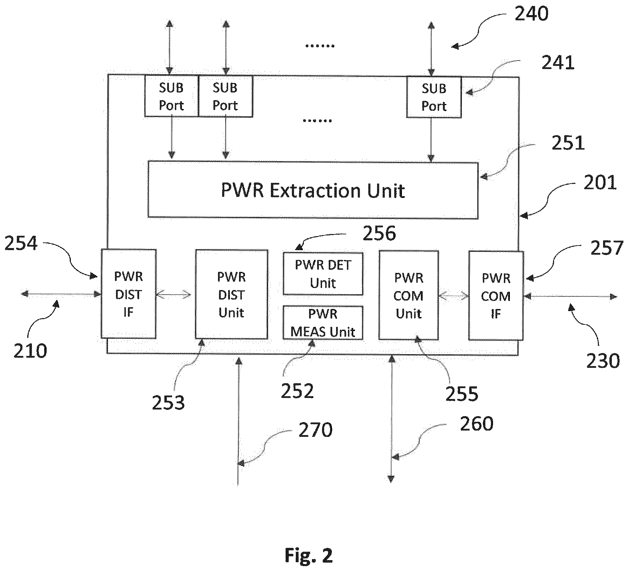

Figure 2 schematically illustrates an exemplary network node 201 according to an embodiment of the present invention. The arrangement of the functional blocks in network node 201 represents only one possible configuration and other arrangements of the functional blocks are within the reach of the skilled person.

The network node 201 may be the same as or similar to the network node 101- 1 -101-3 as shown in Figure 1. For example in a G.fast based network system, the network node 201 may be implemented as a DPU. Similar to that shown in Figure 1, the network node can be coupled with at least one subscriber device (e.g., the subscriber devices 102-1 - 102-6 in Figure 1) through the respective subscriber lines 240 and subscriber ports 241. On the other hand, the network node 201 may also be connected to a central node (e.g., a CO) of the network system through an uplink line 260 (e.g., an optical fiber or copper uplink) as mentioned above.

In particular, the network node 201 comprises a power extraction unit 251 configured to extract (drain) power from the respective at least one subscriber line 240, as indicated by the arrow between the power extraction unit 251 and the subscriber ports(s) 241. Apparently, each subscriber line 240 is coupled with a respective subscriber port 241. The power extraction unit 251 may receive power from each active subscriber line coupled with a powered/operating subscriber device. In case of remote powering from the upstream node (i.e. RFT-C/V), the network node 201 may receive power via uplink line 260. For example, it is possible to combine RFT-C/V and the uplink (data) line 260 on a single twisted pair. Alternatively, a dedicated power interface 270 between the upstream node (e.g. CO) and the node 201 may be provided. In embodiments, the network node 201 may receive power via subscriber line(s) 240 and from the upstream node.

The power drained/extracted from the respective subscriber line(s) 240 (and/or uplink line 260 and/or dedicated power interface 270) may be considered as the total power available at the network node 201. The network node 201 further comprise a power measurement unit 252 configured to determine whether excess power is available at the network node 201. The excess power may be determined based on a (total) power available through the at least one subscriber line 240 (and/or uplink line 260 and/or dedicated power interface 270) and a power consumption of the network node 201 itself. The power consumption of a network node (e.g., the network node 201) is generally referred to the power required by the network node to maintain its own regular operation, and (optionally) to also be able to activate some (extra) enhanced functionalities (e.g., vectoring) if needed. In some cases, the excess power can be determined based on the difference between the (total) power available through the at least one subscriber line 240 (and/or uplink line 260 and/or dedicated power interface 270) and the power consumption of the network node 201. In some further cases, part of the excess power (e.g., 20%) as determined above may be kept by the network node 201 and saved as some kind of buffer for potential further use. In such cases, maybe only the remaining part of the excess power (e.g., 80%) as determined above can be delivered to other network node(s) in the network system. In any case, determining the available excess power allows a node to determine how much power it can share with one or more other nodes without endangering its own safe operation. For example, it can be avoided that too much power is being given to the next node in the XDLV/MOV chain.

The network node 201 further comprises a power distribution unit 253 and a corresponding power distribution interface 254. Thus, if the excess power is determined by the power measurement unit 252 as available at the network node 201, the power distribution unit 253 can then be configured to deliver at least part of the excess power (depending on whether buffering of part of the available excess power is required or not at the network node 201) to at least one further network node (not shown in Figure 2) through the power distribution interface 254 via the interconnection 210. In particular, this is configurable during implementation or by the operator. The interconnection 210 may be the same as or similar to the power distribution wiring 110 as shown in Figure 1. Configured as such, the excess power (with respect to the power consumption of the network node itself) of the network node 201 can be delivered to or shared with the other network node(s) in the same XDLV/MOV chain which is/are in short of power (e.g., for enabling/activating certain enhanced functionalities and/or for wide range service support), such as the network node 101-1 of Figure 1. And consequently, the overall performance of the system (e.g., in terms of bitrate) can be improved, since enhanced functionalities (e.g., vectoring) can now be activated even for situations where supply power (e.g., provided through only one subscriber line) would otherwise be insufficient. On the other hand, in case there is no excess power available in a network node, it could mean that the enhanced functionality (e.g. vectoring) cannot be enabled or activated on the other network node. However, these are typically cases with a low number of lines connected (e.g., one subscriber on DPU1 and one subscriber on DPU2). Consequently, the probability of having high crosstalk and hence a need for the vectoring would be low anyway.

Depending on circumstances and/or requirements, the network node 201 may further comprise a power communication unit 255 configured to share information about power status of the network node 201 itself with at least one further network node in the network system. As will be appreciated by the skilled person, such power status related information may comprise information (message) indicating that the network node 201 has excess power (and possibly how much) available to share or any other similar or suitable information. Another example of the power status information may be an indication of the maximum power that can be delivered per subscriber in order to do fair power balancing between all users sharing the same binder. Further information that could be exchanged is the amount of power that each transmission line is delivering to the DPU and/or the maximum power that each transmission line can deliver to the DPU and/or the maximum power that the uplink line can deliver to the DPU.

Additionally or alternatively, the network node 201 may further comprise a power detection unit 256 configured to detect power status of the at least one further network node. Similarly, such power status may comprise information (message) indicating that the further network node(s) has excess power available to deliver or any other similar or suitable information. The indication of additional power available at the other network node(s) may be then used as a trigger to enable or activate the enhanced functionality such as vectoring.

In some cases, the network node may yet further comprise an additional power communication interface 257 coupled with the power communication unit 255 for exchanging the power status information/message with the other network node(s), possibly via a further interconnection 230. Alternatively, interconnection interfaces 210 and 230 may be combined in one interface whereby power distribution and information/messaging are combined in one interconnection between the network nodes. Configured as such, each network node may be able to allow messages to be shared or exchanged among all network nodes (in particular the network nodes in the XDLV/MOV chain) about (excess) power status of itself and/or of the other network nodes. As will be understood and appreciated by the skilled person, in some cases, if a network node is capable of (actively) detecting the power status of the other network nodes, the messaging among the network nodes needed for exchanging the information may be possibly omitted (avoided).

Incidentally, it is further noted that the network node 201 may further optionally comprise a power balancing unit (not shown in Figure 2) configured to perform fair power balancing between the users over the full XDLV/MOV scenario. In general, in cases with a low number of subscriber lines on DPU1 and a high number of subscriber lines on DPU2, it would not be fair that the end users on DPU1 need to deliver more power for the same service (and hence have a possibly higher electricity bill) compared to the other end users on DPU2. As will be understood and appreciated by the skilled person, the power balancing mechanism can be performed either on a network node level (i.e., power balancing between end users on the same network node); or on a higher e.g. system level (i.e., power balancing between end users across different network nodes).

In other embodiments, power communication unit 255, power detection unit 256, power communication interface 257 and/or power balancing unit may be arranged within the power distribution unit 253. Of course, other arrangements exist as is understood and appreciated by the skilled person.

It is to be noted that in Figure 2 most of the interconnections between the respective units within the network node 201 are omitted for the sake of conciseness. However, as will be understood and appreciated by the skilled person, the network node 201 may comprise and/or provide such interconnections for exchanging (internal) messages between the units within the network node 201 if necessary.

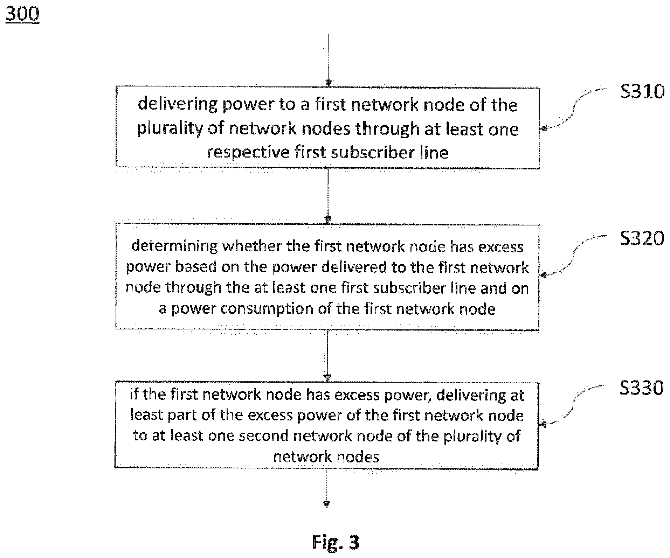

Figure 3 schematically illustrates an exemplary method 300 according to an embodiment of the present invention. The method 300 may be used for power management in a network system (e.g., the network system 100 as shown in Figure 1). The network system may comprise a plurality of network nodes (e.g., the network nodes 101-1- 101-3 as shown in Figure 1) coupled to a plurality of subscriber devices (e.g., the subscriber devices 102-1 - 102-6 as shown in Figure 1) through respective transmission lines (e.g., the subscriber lines 140 as shown in Figure 1). The method 300 may start with step S310 of delivering power to a first network node of the plurality of network nodes through at least one respective first transmission line. Subsequently, the method 300 may comprise step S320 of determining whether the first network node has excess power based on the power available through the at least one first transmission line and on an actual or estimated power consumption of the first network node, possibly including some safe margin. Finally, the method 300 may further comprise step S330 of delivering, if the first network node has excess power, at least part of the excess power of the first network node to at least one second network node of the plurality of network nodes.

The disclosed embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of this disclosure.

It is to be noted that the terms "coupled" and "couplable" should not be interpreted as being restricted to direct connections only. Thus, the scope of the expression "a device A coupled to a device B" should not be limited to devices or systems wherein an output of device A is directly connected to an input of device B, and/or vice-versa. It means that there exists a path between an output of A and an input of B, and/or vice-versa, which may be a path including other devices or means.

It should further be noted that the description and drawings merely illustrate the principles of the present disclosure.

Furthermore, all examples and embodiment outlined in the present disclosure are principally intended expressly to be only for explanatory purposes to help the reader in understanding the principles of the proposed method.

## Claims

1. A method (300) for applying power management to a network system (100), the network system comprising a plurality of network nodes (101-1, 101-2, 101-3, 201) coupled to respective transmission lines (140, 240, 260), the method comprising:
delivering (S310) power to a first network node of the plurality of network nodes through at least one respective first transmission line;
determining (S320), at the first network node, whether the first network node has excess power based on a power available through the at least one first transmission line and on a power consumption of the first network node;
if the first network node has excess power, delivering (S330), by the first network node, at least part of the excess power of the first network node to at least one second network node of the plurality of network nodes through an interconnection between the first network node and the second network node, wherein: the at least one first transmission line comprises at least one subscriber line (140, 240) connecting the first network node to at least one respective subscriber device (102-1,...102-6) configured to inject power over the at least one subscriber line, and/or the at least one first transmission line comprises at least one uplink line (260) connecting the first network node to an upstream node configured to inject power over the at least one uplink line; and:
the first network node and the at least one second network node monitoring their own power status and exchanging information about their respective own power status with each other, and/or
the first network node and the at least one second network node detecting power status of each other.

2. The method according to claim 1, wherein the excess power available for delivery at the first network node is determined based on a difference between the power available through the at least one first transmission line (140, 240, 260) and a power required by the first network node for its own operation.

3. The method according to claim 1, wherein the information about the power status comprises information indicating that a network node has excess power to be shared and/or whether a network node needs power for enabling an extended functionality.

4. The method according to any one of the preceding claims, wherein the method further comprises:
balancing an amount of power drained from the respective transmission lines (140, 240, 260) coupled to different network nodes.

5. The method according to any one of the preceding claims, wherein the step of delivering (S330) excess power to the at least one second network node is performed for enabling an extended functionality at the at least one second network node.

6. The method according to any one of the preceding claims, wherein the network system (100) is based on Digital Subscriber Line, DSL technology.

7. The method according to claim 6, wherein the step of delivering (S330) excess power to the at least one second network node is performed for enabling vectoring functionality at the at least one second network node for cancelling crosstalk.

8. A network node (101-1, 101-2, 101-3, 201) of a network system (100), the network node comprising:
a power extraction unit (251);
a power measurement unit (252);
a power distribution unit (253); and
a power distribution interface (254),
wherein the power extraction unit (251) is configured to extract power from at least one respective transmission line (140, 240, 260);
wherein the power measurement unit (252) is configured to determine whether excess power is available at the network node based on the power available through the at least one transmission line (140, 240, 260) and a power consumption of the network node and;
wherein the power distribution unit (253) is configured to, if the excess power is available at the network node, deliver at least part of the excess power to at least one further network node through the power distribution interface (254) via an interconnection between the network node and the further network node, wherein:
the at least one transmission line comprises at least one subscriber line (140, 240) connecting the network node to at least one respective subscriber device (102-1,... 102-6) configured to inject power over the at least one subscriber line, and/or
the at least one transmission line comprises at least one uplink line (260) connecting the network node to an upstream node configured to inject power over the at least one uplink line, wherein:
the network node and the further network node are configured to monitor their own power status and to exchange information about their respective own power status with each other, and/or
the network node and the further network node are configured to detect power status of each other.

9. The network node according to claim 8, wherein the network node (101-1, 101-2, 101-3, 201) further comprises:
a power communication unit (255); and
a power communication interface (257),
wherein the power communication unit (255) is configured to share information about power status of the network node through the power communication interface (257) with the at least one further network node.

10. The network node according to claim 9, wherein the network node (101-1, 101-2, 101-3, 201) further comprises:
a power detection unit (256) configured to detect power status of the at least one further network node through the power communication interface (257).

11. The network node according to claim any one of claims 8 to 10, wherein the network system (100) is based on Digital Subscriber Line, DSL, technology, the network node (101-1, 101-2, 101-3, 201) being a Digital Subscriber Line Access Multiplexer, DSLAM, or a Distribution Point Unit, DPU.

## Patentansprüche

1. Verfahren (300) zum Anwenden einer Energieverwaltung auf ein Netzwerksystem (100), wobei das Netzwerksystem eine Vielzahl von Netzwerkknoten (101-1, 101-2, 101-3, 201) umfasst, die an jeweilige Übertragungsleitungen (140, 240, 260) gekoppelt sind, wobei das Verfahren Folgendes umfasst:
Liefern (S310) von Energie über mindestens eine jeweilige erste Übertragungsleitung an einen ersten Netzwerkknoten der Vielzahl von Netzwerkknoten;
Bestimmen (S320) am ersten Netzwerkknoten, ob der erste Netzwerkknoten auf Basis einer über die mindestens eine erste Übertragungsleitung verfügbaren Energie und eines Energieverbrauchs des ersten Netzwerkknotens überschüssige Energie aufweist;
wenn der erste Netzwerkknoten überschüssige Energie aufweist, Liefern (S330) von mindestens einem Teil der überschüssigen Energie des ersten Netzwerkknotens durch den ersten Netzwerkknoten über eine Zwischenverbindung zwischen dem ersten Netzwerkknoten und einem zweiten Netzwerkknoten an mindestens den zweiten Netzwerkknoten der Vielzahl von Netzwerkknoten, wobei: die mindestens eine erste Übertragungsleitung mindestens eine Teilnehmerleitung (140, 240) umfasst, die den ersten Netzwerkknoten mit mindestens einer jeweiligen Teilnehmervorrichtung (102-1,... 102-6) verbindet, die dazu ausgelegt ist, Energie über die mindestens eine Teilnehmerleitung einzuspeisen, und/oder die mindestens eine erste Übertragungsleitung mindestens eine Uplinkleitung (260) umfasst, die den ersten Netzwerkknoten mit einem stromaufwärtigen Knoten verbindet, der dazu ausgelegt ist, Energie über die mindestens eine Uplinkleitung einzuspeisen; und:
wobei der erste Netzwerkknoten und der mindestens eine zweite Netzwerkknoten ihren eigenen Energiestatus überwachen und Informationen über ihren jeweiligen eigenen Energiestatus miteinander austauschen, und/oder
wobei der erste Netzwerkknoten und der mindestens eine zweite Netzwerkknoten einen Energiestatus voneinander detektieren.

2. Verfahren nach Anspruch 1, wobei die zur Lieferung am ersten Netzwerkknoten verfügbare überschüssige Energie auf Basis einer Differenz zwischen der durch die mindestens eine erste Übertragungsleitung (140, 240, 260) verfügbare Energie und einer vom ersten Netzwerkknoten für seinen Betrieb erforderlichen Energie bestimmt wird.

3. Verfahren nach Anspruch 1, wobei die Informationen über den Energiestatus Informationen umfassen, die anzeigen, dass ein Netzwerkknoten über überschüssige Energie verfügt, die gemeinsam zu verwenden ist, und/oder ob ein Netzwerkknoten Energie für eine erweiterte Funktionalität benötigt.

4. Verfahren nach einem der vorhergehenden Ansprüche, wobei das Verfahren ferner Folgendes umfasst:
Ausgleichen einer Energiemenge, die von den jeweiligen Übertragungsleitungen (140, 240, 260), die an verschiedene Netzwerkknoten gekoppelt sind, abgeleitet wird.

5. Verfahren nach einem der vorhergehenden Ansprüche, wobei der Schritt des Lieferns (S330) von überschüssiger Energie an den mindestens einen zweiten Netzwerkknoten zum Ermöglichen einer erweiterten Funktionalität an dem mindestens einen zweiten Netzwerkknoten durchgeführt wird.

6. Verfahren nach einem der vorhergehenden Ansprüche, wobei das Netzwerksystem (100) auf einer digitalen Teilnehmerleitungs(DSL)-Technologie basiert.

7. Verfahren nach Anspruch 6, wobei der Schritt des Lieferns (S330) von überschüssiger Energie an den mindestens einen zweiten Netzwerkknoten zum Ermöglichen einer Vektorisierungsfunktionalität an dem mindestens einen zweiten Netzwerkknoten zum Unterdrücken eines Übersprechens durchgeführt wird.

8. Netzwerkknoten (101-1, 101-2, 101-3, 201) eines Netzwerksystems (100), wobei der Netzwerkknoten Folgendes umfasst:
eine Energieextraktionseinheit (251);
eine Energiemesseinheit (252);
eine Energieverteilungseinheit (253); und
eine Energieverteilungsschnittstelle (254),
wobei die Energieextraktionseinheit (251) dazu ausgelegt ist, von mindestens einer jeweiligen Übertragungsleitung (140, 240, 260) Energie zu extrahieren;
wobei die Energiemesseinheit (252) dazu ausgelegt ist, auf Basis der durch die mindestens eine Übertragungsleitung (140, 240, 260) verfügbaren Energie und eines Energieverbrauchs des Netzwerkknotens zu bestimmen, ob am Netzwerkknoten überschüssige Energie verfügbar, ist; und
wobei, wenn die überschüssige Energie am Netzwerkknoten verfügbar ist, die Energieverteilungseinheit (253) dazu ausgelegt ist, mindestens einen Teil der überschüssigen Energie über die Energieverteilungsschnittstelle (254) via eine Zwischenverbindung zwischen dem Netzwerkknoten und einem weiteren Netzwerkknoten an den mindestens einen weiteren Netzwerkknoten zu liefern, wobei:
die mindestens eine Übertragungsleitung mindestens eine Teilnehmerleitung (140, 240) umfasst, die den Netzwerkknoten mit mindestens einer jeweiligen Teilnehmervorrichtung (102-1,... 102-6) verbindet, die dazu ausgelegt ist, Energie über die mindestens eine Teilnehmerleitung einzuspeisen, und/oder
die mindestens eine Übertragungsleitung mindestens eine Uplinkleitung (260) umfasst, die den Netzwerkknoten mit einem stromaufwärtigen Knoten verbindet, der dazu ausgelegt ist, Energie über die mindestens eine Uplinkleitung einzuspeisen, wobei:
der Netzwerkknoten und der weitere Netzwerkknoten dazu ausgelegt sind, ihren eigenen Energiestatus zu überwachen und Informationen über ihren jeweiligen eigenen Energiestatus miteinander auszutauschen, und/oder
der Netzwerkknoten und der weitere Netzwerkknoten dazu ausgelegt sind, einen Energiestatus voneinander zu detektieren.

9. Netzwerkknoten nach Anspruch 8, wobei der Netzwerkknoten (101-1, 101-2, 101-3, 201) ferner Folgendes umfasst:
eine Energiekommunikationseinheit (255); und
eine Energiekommunikationsschnittstelle (257),
wobei die Energiekommunikationseinheit (255) dazu ausgelegt ist, Informationen über einen Energiestatus des Netzwerkknotens über die Energiekommunikationsschnittstelle (257) mit dem mindestens einen weiteren Netzwerkknoten gemeinsam zu verwenden.

10. Netzwerkknoten nach Anspruch 9, wobei der Netzwerkknoten (101-1, 101-2, 101-3, 201) ferner Folgendes umfasst:
eine Energiedetektionseinheit (256), die dazu ausgelegt ist, über die Energiekommunikationsschnittstelle (257) einen Energiestatus des mindestens einen weiteren Netzwerkknotens zu detektieren.

11. Netzwerkknoten nach einem der Ansprüche 8 bis 10, wobei das Netzwerksystem (100) auf einer digitalen Teilnehmerleitungs(DSL)-Technologie basiert, wobei der Netzwerkknoten (101-1, 101-2, 101-3, 201) ein digitaler Teilnehmerleitungszugangsmultiplexer, DSLAM, oder eine Verteilungspunkteinheit, DPU, ist.

## Revendications

1. Procédé (300) pour appliquer une gestion de puissance à un système de réseau (100), le système de réseau comprenant une pluralité de noeuds de réseau (101-1, 101-2, 101-3, 201) couplés à des lignes de transmission (140, 240, 260) respectives, le procédé comprenant :
la distribution (S310) de puissance à un premier noeud de réseau de la pluralité de noeuds de réseau par au moins une première ligne de transmission respective ;
la détermination (S320), au niveau du premier noeud de réseau, précisant si le premier noeud de réseau a une puissance excédentaire, en se basant sur une puissance disponible à travers l'au moins une première ligne de transmission et une consommation de puissance du premier noeud de réseau ;
si le premier noeud de réseau a une puissance excédentaire, la distribution (S330), par le premier noeud de réseau, d'au moins une partie de la puissance excédentaire du premier noeud de réseau à au moins un deuxième noeud de réseau de la pluralité de noeuds de réseau, par l'intermédiaire d'une interconnexion entre le premier noeud de réseau et le deuxième noeud de réseau, dans lequel : l'au moins une première ligne de transmission comprend au moins une ligne d'abonné (140, 240) connectant le premier noeud de réseau à au moins un dispositif d'abonné (102-1,... 102-6) respectif configuré pour injecter de la puissance dans l'au moins une ligne d'abonné, et/ou l'au moins une première ligne de transmission comprend au moins une ligne de liaison montante (260) connectant le premier noeud de réseau à un noeud en amont configuré pour injecter de la puissance dans l'au moins une ligne de liaison montante ; et :
le premier noeud de réseau et l'au moins un deuxième noeud de réseau surveillant leurs propres états de puissance et s'échangeant des informations sur leurs propres états de puissance respectifs, et/ou
le premier noeud de réseau et l'au moins un deuxième noeud de réseau détectant l'état de puissance l'un de l'autre.

2. Procédé selon la revendication 1, dans lequel la puissance excédentaire disponible pour la distribution au niveau du premier noeud de réseau est déterminée en se basant sur une différence entre la puissance disponible à travers l'au moins une première ligne de transmission (140, 240, 260) et une puissance requise par le premier noeud de réseau pour son propre fonctionnement.

3. Procédé selon la revendication 1, dans lequel les informations sur l'état de puissance comprennent des informations indiquant qu'un noeud de réseau a une puissance excédentaire à partager et/ou si un noeud de réseau a besoin de puissance pour activer une fonctionnalité étendue.

4. Procédé selon l'une quelconque des revendications précédentes, dans lequel le procédé comprend en outre :
l'équilibrage d'une quantité de puissance drainée par les lignes de transmission (140, 240, 260) respectives couplées à différents noeuds de réseau.

5. Procédé selon l'une quelconque des revendications précédentes, dans lequel l'étape de distribution (S330) de puissance excédentaire à l'au moins un deuxième noeud de réseau est effectuée pour activer une fonctionnalité étendue au niveau de l'au moins un deuxième noeud de réseau.

6. Procédé selon l'une quelconque des revendications précédentes, dans lequel le système de réseau (100) est basé sur une technologie DSL (ligne d'abonné numérique).

7. Procédé selon la revendication 6, dans lequel l'étape de distribution (S330) de puissance excédentaire à l'au moins un deuxième noeud de réseau est effectuée pour activer une fonctionnalité de vectorisation au niveau de l'au moins un deuxième noeud de réseau pour annuler une diaphonie.

8. Noeud de réseau (101-1, 101-2, 101-3, 201) d'un système de réseau (100), le noeud de réseau comprenant :
une unité d'extraction de puissance (251) ;
une unité de mesure de puissance (252) ;
une unité de répartition de puissance (253) ; et
une interface de répartition de puissance (254),
dans lequel l'unité d'extraction de puissance (251) est configurée pour extraire de la puissance à partir d'au moins une ligne de transmission (140, 240, 260) respective ;
dans lequel l'unité de mesure de puissance (252) est configurée pour déterminer si une puissance excédentaire est disponible au niveau du noeud de réseau, en se basant sur la puissance disponible à travers l'au moins une ligne de transmission (140, 240, 260) et une consommation de puissance du noeud de réseau et ;
dans lequel l'unité de répartition de puissance (253) est configurée pour, si la puissance excédentaire est disponible au niveau du noeud de réseau, distribuer au moins une partie de la puissance excédentaire à au moins un noeud de réseau supplémentaire par l'intermédiaire de l'interface de répartition de puissance (254) via une interconnexion entre le noeud de réseau et le noeud de réseau supplémentaire, dans lequel :
l'au moins une ligne de transmission comprend au moins une ligne d'abonné (140, 240) connectant le noeud de réseau à au moins un dispositif d'abonné (102-1,... 102-6) respectif configuré pour injecter de la puissance dans l'au moins une ligne d'abonné, et/ou
l'au moins une ligne de transmission comprend au moins une ligne de liaison montante (260) connectant le noeud de réseau à un noeud en amont configuré pour injecter de la puissance dans l'au moins une ligne de liaison montante, dans lequel :
le noeud de réseau et le noeud de réseau supplémentaire sont configurés pour surveiller leurs propres états de puissance et pour s'échanger des informations sur leurs propres états de puissance respectifs, et/ou
le noeud de réseau et le noeud de réseau supplémentaire sont configurés pour détecter l'état de puissance l'un de l'autre.

9. Noeud de réseau selon la revendication 8, dans lequel le noeud de réseau (101-1, 101-2, 101-3, 201) comprend en outre :
une unité de communication de puissance (255) ; et
une interface de communication de puissance (257),
dans lequel l'unité de communication de puissance (255) est configurée pour partager des informations sur l'état de puissance du noeud de réseau, par l'intermédiaire de l'interface de communication de puissance (257), avec l'au moins un noeud de réseau supplémentaire.

10. Noeud de réseau selon la revendication 9, dans lequel le noeud de réseau (101-1, 101-2, 101-3, 201) comprend en outre :
une unité de détection de puissance (256) configurée pour détecter l'état de puissance de l'au moins un noeud de réseau supplémentaire par l'intermédiaire de l'interface de communication de puissance (257).

11. Noeud de réseau selon l'une quelconque des revendications 8 à 10, dans lequel le système de réseau (100) est basé sur une technologie DSL (ligne d'abonné numérique), le noeud de réseau (101-1, 101-2, 101-3, 201) étant un DSLAM (multiplexeur d'accès de ligne d'abonné numérique) ou une DPU (unité de points de répartition).
